# FASCICULE DE BREVET EUROPEEN

(11) **EP 4 003 759 B1**
(45) Date de publication et mention de la délivrance du brevet: **13.12.2023**
(21) Numéro de dépôt: 20754332.3
(22) Date de dépôt: 21.07.2020
(51) Int. Cl.: B60C 11/00, B60C 11/03

(54) **PNEUMATIQUE A BANDE DE ROULEMENT PERFECTIONNÉE**
REIFEN MIT VERBESSERTER LAUFFLÄCHE
TYRE WITH IMPROVED TREAD

(30) Priorité: 23.07.2019 FR 1908311
(43) Date de publication de la demande: 01.06.2022
(73) Titulaire: COMPAGNIE GENERALE DES ETABLISSEMENTS MICHELIN, 63040 Clermont-Ferrand (FR)
(72) Inventeur: DURAND-GASSELIN, Benoit, 63040 CLERMONT-FERRAND CEDEX 9 (FR); HELLOT, Fabien, 63040 CLERMONT-FERRAND CEDEX 9 (FR); FRANCOIS, Marie-Laure, 63040 CLERMONT-FERRAND CEDEX 9 (FR); MUHLHOFF, Olivier, 63040 CLERMONT-FERRAND CEDEX 9 (FR)
(74) Mandataire: M.F.P. Michelin
(86) Numéro de dépôt international: PCT/FR2020/051316
(87) Numéro de publication internationale: WO 2021/014089

(56) Documents cités:
- EP-A2- 0 097 787
- DE-A1- 19 946 446
- JP-A- 2002 240 510
- US-A- 4 619 300
- US-A1- 2006 231 181
- US-A1- 2012 132 332

## Description

La présente invention concerne un pneumatique pour un véhicule de tourisme, et plus particulièrement la bande de roulement d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Le plan équateur est le plan circonférentiel, perpendiculaire à l'axe de rotation, passant par le milieu de la bande de roulement.

Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande de roulement destinée à venir en contact avec le sol par l'intermédiaire d'une surface de roulement, au moins une armature de sommet radialement intérieure à la bande de roulement. Le pneumatique comprend également deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement, est constituée donc par le ou les mélanges caoutchouteux radialement extérieur à la couche d'éléments de renforcement la plus radialement extérieure de l'armature de sommet, en excluant les mélanges caoutchouteux enrobant les éléments de renforcement de ladite couche de sommet. L'expression « mélange caoutchouteux » désigne une composition de caoutchouc comportant au moins un élastomère et une charge. La bande de roulement des pneumatiques considérés par l'invention comprend des découpures qui correspondent à l'espace délimité par des parois de matière se faisant face et distantes l'une de l'autre d'une distance non nulle et reliées par une surface de fond. La hauteur sculpture est la distance radiale maximale entre les points les plus radialement intérieurs des surfaces de fond et la surface de roulement.

Ces découpures sont essentielles pour la performance en adhérence sur sol mouillé et notamment d'hydroplanage. Les surpressions sur le sol que les découpures engendrent à l'interface entre la surface de roulement et lesdites parois, permettent de rompre le film d'eau présent sur le sol de roulage afin de mettre en contact le dit sol et le mélange caoutchouteux de la bande de roulement. Les découpures constituent également un volume de creux qui permet de stocker l'eau présente sur le sol et déplacée par la mise en contact de la surface de roulement sur le sol de roulage. Cette capacité de stockage est primordiale dans la performance d'hydroplanage.

Les performances des pneumatiques évoluent avec leur usure. Au fur et à mesure de la diminution avec l'usure de la hauteur sculpture, les performances du pneumatique évoluent, la résistance au roulement baisse car l'épaisseur de mélanges caoutchouteux déformée est diminuée, la rigidité de la sculpture augmente et la capacité de stockage d'eau diminue et en conséquence la performance d'hydroplanage diminue.

Pour améliorer plus encore la performance en adhérence sur sol mouillée et notamment d'hydroplanage pour un pneumatique usé, une solution est d'utiliser un mélange caoutchouteux de haute hystérèse à 0°C pour la bande de roulement à l'état neuf. Cette solution en revanche dégrade fortement la résistance au roulement car le mélange caoutchouteux ayant de telles propriétés à 0°C, a également une hystérèse à 23°C élevée, caractéristique qui pilote prioritairement la résistance au roulement.

Cet objectif est atteint dans l'état de la technique en utilisant des sculptures complexes qui recréent des découpures au fur et à mesure de l'usure du pneumatique (EP 2311655 A1, JPS61 160303). Ces solutions nécessitent la fabrication de moules de pneumatiques complexes, onéreux, compliqués à démouler et sensibles à l'arrachement de gommes.

D'autres pneumatiques sont connus des documents US2012132332, EP097787, DE19946446, US4619300, US2006231181 et JP2002240510.

L'objectif de l'invention est d'assurer une très bonne adhérence sur sol mouillée en fin de vie d'un pneumatique tout en limitant l'impact sur la résistance au roulement en conservant de préférence une bande de roulement simple.

Cet objectif est atteint par un pneumatique pour véhicule tel que défini dans la revendication 1. Le pneumatique selon l'invention comprend:
- une bande de roulement destinée à entrer en contact avec un sol par l'intermédiaire d'une surface de roulement, radialement extérieure à une armature de sommet, comprenant au moins une couche de sommet comprenant des éléments de renforcement,
- la bande de roulement ayant une partie centrale et deux parties axialement extérieures, la partie centrale étant d'une largeur axiale égale à 90% de la largeur axiale L de la bande de roulement, cette partie centrale comprenant au moins deux mélanges caoutchouteux, ces deux mélanges caoutchouteux composant au moins 90% du volume de la partie centrale de la bande de roulement,
- le premier mélange caoutchouteux étant radialement extérieur au deuxième mélange caoutchouteux et le premier mélange caoutchouteux composant au moins 40% et au plus 60% du volume de la partie centrale de la bande de roulement,
- le deuxième mélange caoutchouteux ayant une dureté shore DS2 au moins égale à 5 plus la dureté shore DS1 du premier mélange caoutchouteux, chaque dureté shore DS1, DS2 étant mesurée à 23°C selon la norme ASTM 2240-15e1,
- le deuxième mélange caoutchouteux ayant un module d'extension sécant MA300_2 à 300 % de déformation, mesuré à 23° C selon la norme ASTM D 412-16, au moins égal à 0.75 fois le module d'extension sécant MA300_1 à 300 % de déformation du premier mélange caoutchouteux et au plus égal à 1.25 fois le module d'extension sécant MA300_1 à 300 % de déformation du premier mélange caoutchouteux,
- le deuxième mélange caoutchouteux ayant une perte dynamique tanD0_2, mesurée selon la norme ASTM D 5992 - 96, à une température de 0°C à 10 Hz, au moins égale à la perte dynamique tanD0_1 du premier mélange caoutchouteux mesurée selon la norme ASTM D 5992 - 96, à une température de 0°C à 10 Hz,
- la perte dynamique tanD23_1 du premier mélange caoutchouteux, mesurée selon la norme ASTM D 5992 - 96, à une température de 23°C à 10 Hz, étant au plus égale à la perte dynamique tanD23_2 du deuxième mélange caoutchouteux, mesurée selon la norme ASTM D 5992 - 96, à une température de 23°C à 10 Hz.

L'invention consiste en l'utilisation originale d'une bande de roulement comprenant essentiellement deux mélanges caoutchouteux qui constituent donc 90% du volume de la partie centrale de la bande de roulement et qui sont conçus en termes de performance pour venir en contact avec le sol. Associés à ces deux mélanges caoutchouteux peuvent être associés par exemple pour les 10% restant soit :
- une couche de faible épaisseur radiale, inférieure à 0.4 mm située entre le mélange caoutchouteux enrobant la couche d'éléments de renforcement la plus radialement extérieure de l'armature de sommet et l'interface la plus radialement intérieure du deuxième mélange de la bande de roulement afin d'assurer la liaison entre ces deux éléments,
- une bande, de faible largeur axiale, de mélange caoutchouteux, conducteur d'électricité, faisant le lien entre le sol de roulage et les éléments de renforcement du sommet, afin de permettre au pneumatique de satisfaire aux normes de conductivité électrique.

Les deux mélanges caoutchouteux représentant 90% du volume de la partie centrale sont disposés radialement, le premier étant radialement extérieur au deuxième. L'un et l'autre des mélanges caoutchouteux possédant des propriétés notamment mécaniques compatible avec un roulage sur le sol de roulage, ils ont des potentiels d'usure proches l'un de l'autre. Le potentiel d'usure s'exprime notamment par le module d'extension sécant MA300 à 300 % de déformation, mesuré à 23° C selon la norme ASTM D 412-16 -16. Contrairement à des dispositions bien connues, où, pour améliorer la résistance au roulement au détriment d'autres performances, le deuxième mélange caoutchouteux est pas un matériau mou de très basse hystérèse, de très faible potentiel d'usure, le deuxième mélange caoutchouteux est rigide et hystérétique. De même disposer d'un premier mélange caoutchouteux trop usant par rapport au deuxième mélange caoutchouteux, diminuerait de trop la période d'usage où la hauteur sculpture permet une bonne adhérence sur sol mouillé. Ainsi le deuxième mélange caoutchouteux a un module d'extension sécant MA300_2 à 300 % de déformation, mesuré à 23° C selon la norme ASTM D 412-16, au moins égal à 0.75 fois le module d'extension sécant MA300_1 à 300 % de déformation du premier mélange caoutchouteux et au plus égal à 1.25 fois le module d'extension sécant MA300_1 à 300 % de déformation du premier mélange caoutchouteux.

Les volumes respectifs des différents volumes des mélanges caoutchouteux sont évalués en considérant les surfaces qu'ils occupent sur une coupe méridienne du pneumatique en considérant la géométrie torique du pneumatique pour évaluer le volume.

Avoir deux mélanges caoutchouteux aux modules d'extension sécant MA300 à 300 % de déformation proches, permet une usure plus régulière et homogène et ainsi d'éviter des formes d'usure irrégulières. Ainsi de préférence le deuxième mélange caoutchouteux a un module d'extension sécant MA300_2 à 300 % de déformation, mesuré à 23° C selon la norme ASTM D 412-16, au moins égal à 0.9 fois le module d'extension sécant MA300_1 à 300 % de déformation du premier mélange caoutchouteux et au plus égal à 1.1 fois le module d'extension sécant MA300_1 à 300 % de déformation du premier mélange caoutchouteux.

Pour atteindre la performance recherchée en adhérence sol mouillé en fin d'usure de la bande de roulement et compenser la diminution de la hauteur sculpture, il est nécessaire que le deuxième mélange caoutchouteux ait une meilleure performance en adhérence que le premier mélange caoutchouteux. Ainsi le deuxième mélange caoutchouteux a une perte dynamique tanD0_2, mesurée selon la norme ASTM D 5992 - 96, à une température de 0°C à 10 Hz, au moins égale à la perte dynamique tanD0_1 du premier mélange caoutchouteux mesurée selon la norme ASTM D 5992 - 96, à une température de 0°C à 10 Hz. Pour atteindre le niveau d'adhérence visé par l'invention, les pertes dynamiques tanD0_1 et tanD0_2, mesurées selon la norme ASTM D 5992 - 96, à une température de 0°C à 10 Hz, sont au moins égales à 0,7.

Pour atteindre un tel niveau perte dynamique tanD0 mesurée selon la norme ASTM D 5992 - 96, à une température de 0°C à 10 Hz, les dits premier et deuxième mélanges caoutchouteux comprennent une charge de silice à un taux au moins égal à 100 parties pour cent d'élastomère.

Pour éviter des variations d'adhérence disproportionnées pendant la durée d'utilisation du pneumatique, le deuxième mélange caoutchouteux a une perte dynamique tanD0_2, mesurée selon la norme ASTM D 5992 - 96, à une température de 0°C à 10 Hz, au plus égale 1,2 fois à la perte dynamique tanD0_1 du premier mélange caoutchouteux mesurée selon la norme ASTM D 5992 - 96, à une température de 0°C à 10 Hz.

Pour que l'invention fonctionne, il est par ailleurs nécessaire de créer une synergie entre la position des mélanges caoutchouteux dans la bande de roulement, leurs rigidités et leurs hystérèses. Pour limiter la résistance au roulement et améliorer l'adhérence, l'idée est d'augmenter la rigidité du matériau afin de limiter les déformations créant de la dissipation d'énergie mais également de lutter contre le phénomène du cloquage qui apparait avec la diminution de la hauteur de sculpture liée à l'usure.

Un phénomène bien connu de l'homme de l'art à haute vitesse, est le phénomène de l'hydroplanage. Avec la vitesse, la quantité d'eau à évacuer par seconde dans l'aire de contact augmente. Le taux de creux de la sculpture étant constant, il arrive une vitesse où la quantité d'eau remplit la totalité des creux. En augmentant encore la vitesse, l'eau ne peut plus être évacuée et il se forme un front d'eau à l'avant du pneumatique qui crée une surpression dans l'aire de contact. Sous l'effet de cette pression, la surface de l'aire de contact tend à diminuer, jusqu'à n'être plus suffisante pour assurer l'adhérence du véhicule, entrainant l'hydroplanage.

L'étude de ce phénomène montre qu'un paramètre majeur de l'hydroplanage est le taux de creux de la bande de roulement. Une étude plus fine montre que la déformation du ou des mélanges caoutchouteux de la bande de roulement joue également sur cette performance. Quand la pression de l'eau augmente, suivant la rigidité des mélanges caoutchouteux se produit ou non un phénomène de cloquage avec une perte de contact d'une partie de l'aire de contact avec le sol de roulage. Ce phénomène serait également présent pour des vitesses réduites et il permettrait de coupler les phénomènes d'adhérence et de rigidité des gommes et mais également de résistance au roulement. En effet la résistance au roulement dépend de l'hystérèse des mélanges caoutchouteux de la bande de roulement mais aussi de leurs déformations et donc de leurs rigidités.

Avec l'usure de la bande de roulement, le volume de creux diminue et influence l'adhérence. L'évacuation de l'eau dans l'aire de contact se fait à une pression plus élevée. Cette synergie des phénomènes de rigidité et adhérence serait donc d'autant plus efficace que la hauteur sculpture est faible. Par ailleurs l'augmentation de la rigidité permettrait de limiter la résistance au roulement en limitant la déformation. De manière étonnante, ce raisonnement basé sur des phénomènes d'ordre secondaire sur les performances visées, adhérence et résistance au roulement, fonctionnerait pour autant que l'invention est réalisée avec des matériaux de la bande de roulement sur les plages des descripteurs d'hystérèse et de rigidité qui génèrent effectivement une synergie, conformes à l'invention.

Concernant la rigidité, il est essentiel que le deuxième mélange caoutchouteux ait une dureté shore DS2 au moins égale à 5 plus la dureté shore DS1 du premier mélange caoutchouteux, mais de préférence au plus égale à 10 plus la dureté shore DS1 du premier mélange caoutchouteux pour éviter des problèmes d'usure irrégulière.

Concernant l'hystérèse des mélanges caoutchouteux de la bande de roulement, il est essentiel que la perte dynamique tanD23_1, mesurée selon la norme ASTM D 5992 - 96, à une température de 23°C à 10 Hz, est au plus égale à la perte dynamique tanD23_2, mesurée selon la norme ASTM D 5992 - 96, à une température de 23°C à 10 Hz. De préférence pour améliorer plus encore la résistance au roulement, il est avantageux que la perte dynamique tanD23_1, mesurée selon la norme ASTM D 5992 - 96, à une température de 23°C à 10 Hz, est au plus égale à 0.8 fois la perte dynamique tanD23_2, mesurée selon la norme ASTM D 5992 - 96, à une température de 23°C à 10 Hz. Le premier mélange caoutchouteux, étant le plus radialement extérieur, il se déforme donc le plus. Pour une performance en résistance au roulement adéquate, il doit être le moins hystérétique à 23°C.

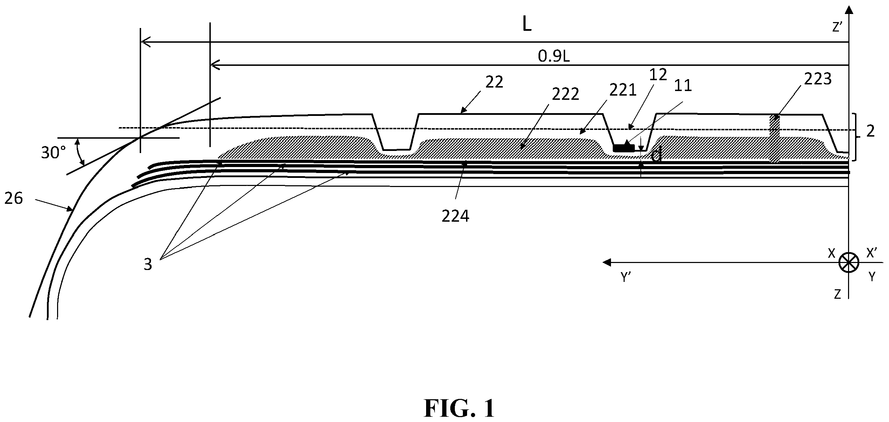

Les propriétés des mélanges caoutchouteux sont mesurées sur des éprouvettes collées extraites du pneumatique. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre « d » de l'éprouvette est de 10 mm [0 à + 0.04mm], l'épaisseur « L » de chacune des portions de mélange caoutchouteux est de 2 mm [1.85-2.20].

Ces propriétés sont mesurées sur un viscoanalyseur de type Metravib VA4000 sur des éprouvettes vulcanisées.

Les termes modules complexes, élastiques et visqueux désignent des propriétés dynamiques bien connues de l'homme du métier. Le « module complexe » G* est défini par la relation suivante : G*= √(***G'*²** + ***G"*²** ) dans laquelle G' représente le module élastique et G" représente le module visqueux. L'angle de phase δ entre la force et le déplacement traduit en perte dynamique tanδ est égal au rapport G"/G'

On enregistre la réponse d'un échantillon de mélange caoutchouteux vulcanisé soumis à une sollicitation sinusoïdale en cisaillement simple alterné, à la fréquence de 10 Hz à contrainte imposée, symétriquement autour de sa position d'équilibre. Une accommodation de l'éprouvette est réalisée préalablement à la mesure de balayage en Température. L'éprouvette est pour cela sollicitée en cisaillement sinusoïdal à 10Hz, à 100% de déformation crête-crête, à 23°C.

La mesure en balayage en Température est réalisée au cours d'une rampe de température croissante de 1,5°C par minute, depuis une température Tmin inférieure à la température de transition vitreuse Tg du matériau, jusqu'à une température Tmax qui peut correspondre au plateau caoutchoutique du matériau. Avant de commencer le balayage, on stabilise l'échantillon à la température Tmin pendant 20 minutes pour avoir une température homogène au sein de l'échantillon. Les résultats exploités à la température et contrainte choisies sont généralement le module complexe de cisaillement dynamique G*, comprenant une partie élastique G', une partie visqueuse G" et l'angle de phase δ entre la force et le déplacement traduit en facteur de perte tanD, égale au rapport G"/G'. La température de transition vitreuse Tg est la température à laquelle la perte dynamique tanD atteint un maximum lors du balayage en température.

Une réalisation préférée est que les parties axialement extérieures de la bande de roulement sont composées d'un mélange caoutchouteux dont la perte dynamique tanD23_E, mesurée selon la norme ASTM D 5992 - 96, à une température de 23°C à 10 Hz, est au plus égale à la perte dynamique tanD23_1 du premier mélange caoutchouteux, mesurée selon la norme ASTM D 5992 - 96, à une température de 23°C à 10 Hz. Les parties axialement extérieures de la bande de roulement sont celles qui se déforment le plus, et elles fonctionnent à déformation imposée. C'est donc la partie de la bande de roulement dans laquelle il convient de positionner un mélange caoutchouteux de plus basse hystérèse mais qui ait les caractéristiques adéquates pour les mélanges caoutchouteux de la bande de roulement.

Pour limiter la complexité industrielle, il est intéressant de réaliser la bande de roulement avec le moins de mélanges caoutchouteux différents et donc de ne pas utiliser de troisième mélange caoutchouteux pour les parties axialement extérieures de la bande de roulement. Ces parties étant les parties de la bande de roulement les plus soumises à la déformation, seule l'utilisation du premier mélange dans les parties axialement extérieures de la bande de roulement, permet d'obtenir une bonne performance en résistance au roulement. Ainsi, il est préféré que les parties axialement extérieures de la bande de roulement comportent au moins 90% du volume du premier mélange caoutchouteux, si d'autres mélanges caoutchouteux sont nécessaires pour l'adhésion de la bande de roulement à l'armature de sommet ou pour la conductivité électrique. Ainsi, il est préféré que les parties axialement extérieures de la bande de roulement de préférence soient composées du premier mélange caoutchouteux.

Pour un fonctionnement optimal de l'invention, il est préféré que le premier mélange caoutchouteux constitue la quasi-totalité, hors des mélanges caoutchouteux éventuellement nécessaires pour assurer la conductivité du pneumatique, de la partie de la bande de roulement la plus radialement extérieure. Ainsi il est préféré que le premier mélange caoutchouteux constitue au moins 90% du volume de la partie centrale de la bande de roulement radialement extérieure aux points radialement extérieurs du point le plus radialement extérieur du témoin d'usure et distant dudit point du témoin d'usure d'une distance radiale égale à 2 mm.

Une solution préférée est que le deuxième mélange caoutchouteux soit présent au-dessus du témoin d'usure afin que l'apport en adhérence soit effectif en fin de vie du pneumatique, avec une limite à ne pas dépasser de 2 mm au-dessus du témoin d'usure afin que l'impact de l'hystérèse à 23°C de ce deuxième mélange caoutchouteux sur la résistance au roulement reste limité. Ainsi une solution préférée est que le deuxième mélange caoutchouteux compose au moins 20% de la portion, de la partie centrale de la bande de roulement, comprise entre la droite axiale passant par le point le plus radialement extérieur du témoin d'usure et les points radialement extérieurs au point le plus radialement extérieur du témoin d'usure et situé à une distance radiale égale à 2 mm de ce dit point le plus radialement extérieur du témoin d'usure.

Une solution avantageuse pour améliorer la résistance au roulement est que les fonds de la sculpture, les fonds des sillons circonférentiels, les fonds de rainures qui ne participent pas à l'adhérence, ni à la rigidité des motifs de sculpture mais qui participe à la performance en résistance au roulement, soit dans le premier mélange caoutchouteux. Ainsi une solution avantageuse est que pour un pneumatique comprenant au moins un sillon circonférentiel, la partie de la bande de roulement, d'une épaisseur radiale de 0,5 mm, à l'aplomb de la surface de fonds de chaque sillon est constituée par le premier mélange caoutchouteux.

Une solution préférée pour une bonne résistance à l'agression de l'armature de sommet est qu'entre le fond des rainures de la sculpture et les éléments de renforcement les plus radialement extérieurs de l'armature de sommet, se trouve une épaisseur de gomme de la bande de roulement dont l'épaisseur radiale soit au moins égale à 1 mm. Cette épaisseur de mélange caoutchouteux est principalement dans le premier mélange caoutchouteux de la bande de roulement. Pour optimiser la résistance au roulement, il convient que cette épaisseur soit la plus fine possible tout en permettant la protection de l'armature de sommet en cas de choc, à savoir que cette épaisseur soit au plus égale à 2,5 mm, de préférence au plus égale à 2 mm. Cette épaisseur est mesurée sur une coupe méridienne depuis les points les plus radialement extérieurs des éléments de renforcement de la couche de sommet la plus radialement extérieure, jusqu'aux points des surfaces de fonds des rainures ou des sillons circonférentiels.

Ainsi une solution préférée est que la distance radiale entre les points les plus radialement intérieurs des rainures et l'armature de sommet est au moins égale à 1 mm et au plus égale à 2.5 mm, préférentiellement au plus égale à 2 mm.

Les caractéristiques et autres avantages de l'invention seront mieux compris à l'aide de la figure représentant une demi coupe méridienne du sommet d'un pneumatique selon l'invention.

Le pneumatique comporte une bande de roulement 2 destinée à entrer en contact avec un sol par l'intermédiaire d'une surface de roulement 22. La bande de roulement comporte deux mélanges caoutchouteux 221, 222 qui composent au moins 90% du volume de la partie centrale de la bande de roulement. La partie centrale est d'une largeur axiale égale à 90% de la largeur axiale L de la bande de roulement.

La bande de roulement 2 peut comporter également dans la partie centrale une partie 223 de faible largeur axiale faisant le lien entre l'armature de sommet et la surface de roulement afin que le pneumatique réponde aux normes de conductivité électrique.

Il est également possible que la bande de roulement comporte un mélange caoutchouteux de couplage 224 d'une épaisseur radiale au plus égale à 0.4 mm afin d'assurer le collage entre l'armature de sommet 3 et la bande de roulement.

Sont représentés également sur la figure, le témoin d'usure et son point le plus radialement extérieur 11 et les points 12 radialement extérieurs audit point 11 à une distance radiale de 2 mm. La partie de la bande de roulement radialement extérieure aux points 12 comporte au moins 90% du volume du premier mélange caoutchouteux 221, le pourcentage de volume restant étant le mélange caoutchouteux conducteur 223 de faible largeur axiale et permettant la jonction entre la surface de roulement et l'armature de sommet.

La partie de la bande de roulement comprise entre la droite passant par le point 11 et la droite constituée par les points 12 comporte 40% en volume du deuxième mélange caoutchouteux.

Le pneumatique comprend en outre une armature de sommet 3 radialement intérieure à la bande de roulement 2, et comprenant plusieurs couches d'éléments de renforcement. Les 2 couches radialement intérieures, représentées sur la figure, sont deux couches de travail, dont les éléments de renforcement, parallèles entre eux dans une même couche, forment des angles avec la direction circonférentielle, dont la valeur absolue est comprise entre 17 et 50°. Les éléments de renforcement sont croisés d'une couche à l'autre. La couche la plus radialement extérieure est une couche de frettage dont les éléments de renforcement forment un angle compris entre -7 et +7° avec la direction circonférentielle.

La figure montre également comment déterminer la largeur L de la bande de roulement. La largeur L de la bande de roulement est déterminée sur un pneumatique monté, sur une jante nominale et gonflé à la pression nominale. Dans le cas d'une frontière évidente entre la surface de roulement et le reste du pneumatique, la largeur de la bande de roulement est déterminée trivialement par l'homme du métier. Dans le cas où la surface de roulement 21 est continue avec la surface latérale extérieure 26 du pneumatique, la limite axiale de la surface de roulement passe par le point pour lequel l'angle entre la tangente à la surface de roulement 21 et une direction axiale YY' est égal à 30°. Lorsqu'il existe sur un plan méridien, plusieurs points pour lesquels ledit angle est égal à 30°, on retient le point radialement le plus à l'extérieur. La largeur de la bande de roulement est égale à la distance axiale entre les deux limites axiales de la surface de roulement de part et d'autre du plan équateur.

Les inventeurs ont réalisé des tests sur la base de l'invention pour un pneumatique de dimension 225/45 R17, d'une largeur nominale de 225 mm.

Le pneumatique témoin T d'une conception classique et hors invention comprenant deux mélanges caoutchouteux 221 et 222. Le premier mélange caoutchouteux est plus rigide, plus hystérétique donc plus adhérent mais plus dissipateur que le deuxième mélange caoutchouteux conçu dans un objectif classique de baisse de la résistance au roulement. Le deuxième mélange n'est donc pas conçu pour être en contact avec le sol de roulage. Les deux mélanges caoutchouteux ont pour caractéristiques respectives :
- le deuxième mélange 222 caoutchouteux a une dureté shore DS2 a égale à 64 et la dureté shore DS1 du premier mélange caoutchouteux 221 a une dureté shore égale à 63.5. Chaque dureté shore DS1, DS2 est mesurée à 23°C selon la norme ASTM 2240-15e1.
- le premier mélange caoutchouteux 221 a un module d'extension sécant MA300_2 à 300 % de déformation, mesuré à 23° C selon la norme ASTM D 412-16, égal à 1.77 MPa. Le module d'extension sécant MA300_1 à 300 % de déformation du deuxième mélange caoutchouteux 222 ne peut être mesuré, il rompt avant d'atteindre les conditions de mesure du MA300, car ce mélange est un mélange très basse résistance au roulement, non conçu pour être en contact avec le sol de roulage.
- le deuxième mélange caoutchouteux 222 a une perte dynamique tanD0_2, mesurée selon la norme ASTM D 5992 - 96, à une température de 0°C à 10 Hz, égale à 0.23 et la perte dynamique tanD0_1 du premier mélange caoutchouteux 221 mesurée selon la norme ASTM D 5992 - 96, à une température de 0°C à 10 Hz, est égale à 0.69,
- la perte dynamique tanD23_1 du premier mélange caoutchouteux 221, mesurée selon la norme ASTM D 5992 - 96, à une température de 23°C à 10 Hz, est égale à 0.15, la perte dynamique tanD23_2 du deuxième mélange caoutchouteux 222, mesurée selon la norme ASTM D 5992 - 96, à une température de 23°C à 10 Hz est égale à 0.38.

La bande de roulement du pneumatique T est composée de 50% en volume du premier mélange caoutchouteux et 50% en volume du deuxième mélange caoutchouteux. Les dispositions des deux mélanges caoutchouteux sont optimisées conformément à l'état de l'art pour le pneumatique T, à savoir que les parties de la bande de roulement en dessous des points les plus radialement extérieurs des témoins d'usure sont composées dans le deuxième mélange sur toute la largeur de la bande de roulement.

L'invention consiste à inverser cette logique de conception en disposant un mélange caoutchouteux de la bande de roulement plus rigide, plus adhérent et donc plus dissipatif également avec une performance usure proche du premier mélange caoutchouteux. Elle a été testée sur pneumatique A1 avec la même proportion géométrique des deux mélanges caoutchouteux que le pneumatique témoin. La bande de roulement est composée de 50% du premier mélange caoutchouteux et 50% du deuxième mélange caoutchouteux. Les parties axialement extérieures de la bande de roulement sont composées du premier mélange caoutchouteux sur le pneumatique A1.

Les deux mélanges caoutchouteux du pneumatique A1 ont pour caractéristiques respectives :
- le deuxième mélange 222 caoutchouteux a une dureté shore DS2 égale à 64 et la dureté shore DS1 du premier mélange caoutchouteux 221 a une dureté shore égale à 57. Chaque dureté shore DS1, DS2 est mesurée à 23°C selon la norme ASTM 2240-15e1.
- le deuxième mélange caoutchouteux 222 a un module d'extension sécant MA300_2 à 300 % de déformation, mesuré à 23° C selon la norme ASTM D 412-16, égal à 1.07 fois le module d'extension sécant MA300_1 à 300 % de déformation du premier mélange caoutchouteux 221.
- le deuxième mélange caoutchouteux 222 a une perte dynamique tanD0_2, mesurée selon la norme ASTM D 5992 - 96, à une température de 0°C à 10 Hz, égale à 0.76 et la perte dynamique tanD0_1 du premier mélange caoutchouteux 221 mesurée selon la norme ASTM D 5992 - 96, à une température de 0°C à 10 Hz, est égale à 0.76,
- la perte dynamique tanD23_1 du premier mélange caoutchouteux 221, mesurée selon la norme ASTM D 5992 - 96, à une température de 23°C à 10 Hz, est égale à 0.39, la perte dynamique tanD23_2 du deuxième mélange caoutchouteux 222, mesurée selon la norme ASTM D 5992 - 96, à une température de 23°C à 10 Hz est égale à 0.51.

Les compositions des premier et deuxième mélanges caoutchouteux 221, 222 du pneumatique A1 sont décrites en référence au tableau 1 ci-dessous.

**Tableau 1**

| | Premier mélange caoutchouteux 221 | Deuxième mélange caoutchouteux 222 |
|---|---|---|
| Elastomère 1 | 100 | / |
| Elastomère 2 | / | 100 |
| Noir de carbone | 4 | 4 |
| Silice | 110 | 150 |
| Résine | 60 | 82 |
| Antioxydant | 3,80 | 5,20 |
| Silane Liquide | 8,80 | 12 |
| Acide stéarique | 3,00 | 3,00 |
| DPG | 2,40 | 3,30 |
| ZnO | 0,90 | 0,90 |
| CBS | 2,30 | 2,30 |
| Souffre | 1,00 | 1,00 |

Chaque élastomère 1 et 2 est identique à respectivement chaque élastomère C et D tel que décrit dans WO2018115722. Le noir de carbone est de garde N234 et fourni par Cabot Corporation. La silice est de type HDS et fournie par Rhodia sous la référence Z1165MP. La résine est fournie par ExxonMobil chemicals sous la référence PR-383. L'antioxydant est la N-(1,3-diméthylbutyl)-N'-phényl-p-phénylènediamine fournie par Flexsys. Le silane liquideest fournie par Degussa sous la référence TESPT Si69. La DPG est la diphénylguanidine fournie par Flexsys sous la référence Perkacit. Le CBS est le N-cyclohexyl-2-benzothiazol-sulfénamide fournie par la Flexsys sous la référence Santocure CBS.

D'autres compositions peuvent bien entendu être utilisées en faisant varier les taux des différents constituants des compositions et ce afin de d'obtenir des propriétés adaptées à des usages particuliers et ce, sans pour autant sortir du cadre de l'invention.

On pourra notamment s'inspirer des compositions divulguées dans WO2012069585, WO2012069565 et WO2012069567 qui présentent un taux de silice relativement élevé.

Les pneumatiques T et A1 ont été testés sur différentes performances. Par rapport au pneumatique T (en base 100), le pneumatique A1 selon l'invention permet d'améliorer de +7% le freinage mouillé à neuf sur béton bitumineux à 20°C et de +9% le freinage mouillé en fin de vie, à 2 mm de hauteur sculpture restante. L'adhérence transversale mouillé est également amélioré (+3.5%), le comportement sec sur circuit est équivalent à la référence et la pénalisation d'environ 7% en résistance au roulement est plus faible de 50% par rapport à la pénalisation estimée par calcul, preuve d'une synergie inattendue entre la rigidité, l'adhérence et la résistance au roulement que permet d'exploiter l'invention.

## Revendications

1. Pneumatique (1) pour véhicule comprenant :
• une bande de roulement (2) destinée à entrer en contact avec un sol par l'intermédiaire d'une surface de roulement (22), radialement extérieure à une armature de sommet (3), ladite armature de sommet comprenant au moins une couche de sommet comprenant des éléments de renforcement,
• la bande de roulement ayant une partie centrale et deux parties axialement extérieures, la partie centrale étant d'une largeur axiale égale à 90% de la largeur axiale L de la bande de roulement (2), cette partie centrale comprenant au moins deux mélanges caoutchouteux (221, 222), ces deux mélanges caoutchouteux composant au moins 90% du volume de la partie centrale de la bande de roulement (2),
• le premier mélange caoutchouteux (221) étant radialement extérieur au deuxième mélange caoutchouteux (222) et le premier mélange caoutchouteux (221) composant au moins 40% et au plus 60% du volume de la partie centrale de la bande de roulement (2),
• **caractérisé en ce que** le deuxième mélange (222) caoutchouteux a une dureté shore DS2 au moins égale à 5 plus la dureté shore DS1 du premier mélange caoutchouteux (221), chaque dureté shore DS1, DS2 étant mesurée à 23°C selon la norme ASTM 2240-15e1,
• **en ce que** le deuxième mélange caoutchouteux (222) a un module d'extension sécant MA300_2 à 300 % de déformation, mesuré à 23° C selon la norme ASTM D 412-16, au moins égal à 0.75 fois le module d'extension sécant MA300_1 à 300 % de déformation du premier mélange caoutchouteux (221) et au plus égal à 1.25 fois le module d'extension sécant MA300_1 à 300 % de déformation du premier mélange caoutchouteux (221),
• **en ce que** le deuxième mélange caoutchouteux (222) a une perte dynamique tanD0_2, mesurée selon la norme ASTM D 5992 - 96, à une température de 0°C à 10 Hz, au moins égale à la perte dynamique tanD0_1 du premier mélange caoutchouteux (221) mesurée selon la norme ASTM D 5992 - 96, à une température de 0°C à 10 Hz,
• **en ce que** la perte dynamique tanD23_1 du premier mélange caoutchouteux (221), mesurée selon la norme ASTM D 5992 - 96, à une température de 23°C à 10 Hz, est au plus égale à la perte dynamique tanD23_2 du deuxième mélange caoutchouteux (222), mesurée selon la norme ASTM D 5992 - 96, à une température de 23°C à 10 Hz, et
• **en ce que** les dits premier et deuxième mélanges caoutchouteux (221, 222) comprennent une charge de silice au moins égale à 100 parties pour cent d'élastomère et dont les pertes dynamiques tanD0_1 et tanD0_2, mesurées selon la norme ASTM D 5992 - 96, à une température de 0°C à 10 Hz, sont au moins égales à 0,7.

2. Pneumatique selon la revendication précédente, dans lequel le deuxième mélange caoutchouteux (222) a une perte dynamique tanD0_2, mesurée selon la norme ASTM D 5992 - 96, à une température de 0°C à 10 Hz, au plus égale 1,2 fois à la perte dynamique tanD0_1 du premier mélange caoutchouteux (221) mesurée selon la norme ASTM D 5992 - 96, à une température de 0°C à 10 Hz.

3. Pneumatique selon l'une quelconque des revendications précédentes, dans lequel la perte dynamique tanD23_1, du premier mélange caoutchouteux (221), mesurée selon la norme ASTM D 5992 - 96, à une température de 23°C à 10 Hz, est au plus égale à 0.8 fois la perte une perte dynamique tanD23_2, du deuxième mélange caoutchouteux (222), mesurée selon la norme ASTM D 5992 - 96, à une température de 23°C à 10 Hz.

4. Pneumatique selon l'une quelconque des revendications précédentes, dans lequel le deuxième mélange (222) caoutchouteux a un module d'extension sécant MA300_2 à 300 % de déformation, mesuré à 23° C selon la norme ASTM D 412-16, au moins égal à 0.9 fois le module d'extension sécant MA300_1 à 300 % de déformation du premier mélange caoutchouteux et au plus égal à 1.1 fois le module d'extension sécant MA300_1 à 300 % de déformation du premier mélange caoutchouteux (221).

5. Pneumatique selon l'une quelconque des revendications précédentes, dans lequel les parties axialement extérieures de la bande de roulement sont composées d'un mélange caoutchouteux dont la perte dynamique tanD23_E, mesurée selon la norme ASTM D 5992 - 96, à une température de 23°C à 10 Hz, est au plus égale à la perte dynamique tanD23_1 du premier mélange caoutchouteux (221), mesurée selon la norme ASTM D 5992 - 96, à une température de 23°C à 10 Hz.

6. Pneumatique selon l'une quelconque des revendications précédentes, dans lequel les parties axialement extérieures de la bande de roulement comportent au moins à 90% du volume du premier mélange caoutchouteux (221), de préférence soient composées du premier mélange caoutchouteux (221).

7. Pneumatique selon l'une quelconque des revendications précédentes, dans lequel le deuxième mélange (222) caoutchouteux a une dureté shore DS2 au plus égale à 10 plus la dureté shore DS1 du premier mélange caoutchouteux (221).

8. Pneumatique selon l'une quelconque des revendications précédentes, comprenant au moins un témoin d'usure et dans lequel le premier mélange caoutchouteux (221) constitue au moins 90% du volume de la partie centrale de la bande de roulement radialement extérieure aux points radialement extérieurs du point (12) le plus radialement extérieur du témoin d'usure (11), distant dudit point (11) du témoin d'usure d'une distance radiale égale à 2 mm.

9. Pneumatique selon l'une quelconque des revendications précédentes, comprenant au moins un témoin d'usure et dans lequel le deuxième mélange caoutchouteux (222) compose au moins 20% en volume de la portion de la partie centrale de la bande de roulement, comprise entre la droite axiale passant par le point le plus radialement extérieur du témoin d'usure (11) et les points (12) radialement extérieurs au point le plus radialement extérieur du témoin d'usure (11) et situés à une distance radiale égale à 2 mm de ce dit point (11) le plus radialement extérieur du témoin d'usure.

10. Pneumatique selon l'une quelconque des revendications précédentes, comprenant au moins un sillon circonférentiel et dans lequel la partie de la bande de roulement (2), d'une épaisseur radiale de 0,5 mm, à l'aplomb de la surface de chaque sillon circonférentiel est constituée par le premier mélange (221) caoutchouteux.

11. Pneumatique selon l'une quelconque des revendications précédentes, comprenant au moins des rainures et dans lequel la distance radiale (d) entre les points les plus radialement intérieurs des rainures et l'armature de sommet est au moins égale à 1 mm et au plus égale à 2.5 mm, préférentiellement au plus égale à 2 mm.

## Patentansprüche

1. Reifen (1) für ein Fahrzeug, umfassend:
• einen Laufstreifen (2), der dazu bestimmt ist, über eine radial außerhalb einer Scheitelbewehrung (3) befindliche Lauffläche (22) mit einem Boden in Kontakt zu kommen, wobei die Scheitelbewehrung mindestens eine Scheitelschicht umfasst, die Verstärkungselemente umfasst,
• wobei der Laufstreifen einen mittleren Teil und zwei axial äußere Teile aufweist, wobei der mittlere Teil eine axiale Breite aufweist, die 90 % der axialen Breite L des Laufstreifens (2) entspricht, wobei dieser mittlere Teil mindestens zwei Kautschukmischungen (221, 222) umfasst, wobei auf diese zwei Kautschukmischungen mindestens 90 % des Volumens des mittleren Teils des Laufstreifens (2) entfallen,
• wobei sich die erste Kautschukmischung (221) radial außerhalb der zweiten Kautschukmischung (222) befindet und auf die erste Kautschukmischung (221) mindestens 40 % und höchstens 60 % des Volumens des mittleren Teils des Laufstreifens (2) entfallen,
• **dadurch gekennzeichnet, dass** die zweite Kautschukmischung (222) eine Shore-Härte DS2 aufweist, die mindestens gleich 5 plus der Shore-Härte DS1 der ersten Kautschukmischung (221) ist, wobei jede Shore-Härte DS1, DS2 bei 23 °C gemäß der Norm ASTM 2240-15e1 gemessen wird,
• dadurch, dass die zweite Kautschukmischung (222) einen Sekantendehnungsmodul MA300_2 bei 300 % Verformung aufweist, gemessen bei 23 °C gemäß der Norm ASTM D 412-16, der mindestens gleich dem 0,75-Fachen des Sekantendehnungsmoduls MA300_1 bei 300 % Verformung der ersten Kautschukmischung (221) und höchstens gleich dem 1,25-Fachen des Sekantendehnungsmoduls MA300_1 bei 300 % Verformung der ersten Kautschukmischung (221) ist,
• dadurch, dass die zweite Kautschukmischung (222) einen dynamischen Verlustfaktor tanD0_2 aufweist, gemessen gemäß der Norm ASTM D 5992-96 bei einer Temperatur von 0 °C bei 10 Hz, der mindestens gleich dem dynamischen Verlustfaktor tanD0_1 der ersten Kautschukmischung (221) ist, gemessen gemäß der Norm ASTM D 5992-96 bei einer Temperatur von 0 °C bei 10 Hz,
• dadurch, dass der dynamische Verlustfaktor tanD23_1 der ersten Kautschukmischung (221), gemessen gemäß der Norm ASTM D 5992-96 bei einer Temperatur von 23 °C bei 10 Hz, höchstens gleich dem dynamischen Verlustfaktor tanD23_2 der zweiten Kautschukmischung (222) ist, gemessen gemäß der Norm ASTM D 5992-96 bei einer Temperatur von 23 °C bei 10 Hz, und
• dadurch, dass die erste und die zweite Kautschukmischung (221, 222) einen Silica-Füllstoffanteil umfassen, der mindestens gleich 100 Teilen pro hundert Teile Elastomer ist und dessen dynamische Verlustfaktoren tanD0_1 und tanD0_2, gemessen gemäß der Norm ASTM D 5992-96 bei einer Temperatur von 0 °C bei 10 Hz, mindestens gleich 0,7 sind.

2. Reifen nach dem vorhergehenden Anspruch, wobei die zweite Kautschukmischung (222) einen dynamischen Verlustfaktor tanD0_2 aufweist, gemessen gemäß der Norm ASTM D 5992-96 bei einer Temperatur von 0 °C bei 10 Hz, der höchstens gleich dem 1,2-Fachen des dynamischen Verlustfaktors tanD0_1 der ersten Kautschukmischung (221) ist, gemessen gemäß der Norm ASTM D 5992-96 bei einer Temperatur von 0 °C bei 10 Hz.

3. Reifen nach einem der vorhergehenden Ansprüche, wobei der dynamische Verlustfaktor tanD23_1 der ersten Kautschukmischung (221), gemessen gemäß der Norm ASTM D 5992-96 bei einer Temperatur von 23 °C bei 10 Hz, höchstens gleich dem 0,8-Fachen des dynamischen Verlustfaktors tanD23_2 der zweiten Kautschukmischung (222) ist, gemessen gemäß der Norm ASTM D 5992-96 bei einer Temperatur von 23 °C bei 10 Hz.

4. Reifen nach einem der vorhergehenden Ansprüche, wobei die zweite Kautschukmischung (222) einen Sekantendehnungsmodul MA300_2 bei 300 % Verformung aufweist, gemessen bei 23 °C gemäß der Norm ASTM D 412-16, der mindestens gleich dem 0,9-Fachen des Sekantendehnungsmoduls MA300_1 bei 300 % Verformung der ersten Kautschukmischung und höchstens gleich dem 1,1-Fachen des Sekantendehnungsmoduls MA300_1 bei 300 % Verformung der ersten Kautschukmischung (221) ist.

5. Reifen nach einem der vorhergehenden Ansprüche, wobei die axial äußeren Teile des Laufstreifens aus einer Kautschukmischung bestehen, deren dynamischer Verlustfaktor tanD23_E, gemessen gemäß der Norm ASTM D 5992-96 bei einer Temperatur von 23 °C bei 10 Hz, höchstens gleich dem dynamischen Verlustfaktor tanD23_1 der ersten Kautschukmischung (221) ist, gemessen gemäß der Norm ASTM D 5992-96 bei einer Temperatur von 23 °C bei 10 Hz.

6. Reifen nach einem der vorhergehenden Ansprüche, wobei die axial äußeren Teile des Laufstreifens in mindestens 90 % des Volumens die erste Kautschukmischung (221) aufweisen und vorzugsweise aus der ersten Kautschukmischung (221) bestehen.

7. Reifen nach einem der vorhergehenden Ansprüche, wobei die zweite Kautschukmischung (222) eine Shore-Härte DS2 aufweist, die höchstens gleich 10 plus der Shore-Härte DS1 der ersten Kautschukmischung (221) ist.

8. Reifen nach einem der vorhergehenden Ansprüche, welcher mindestens einen Verschleißanzeiger umfasst und wobei die erste Kautschukmischung (221) mindestens 90 % des Volumens des mittleren Teils des Laufstreifens ausmacht, der sich radial außerhalb der Punkte (12) befindet, die radial außerhalb des radial äußersten Punktes (11) des Verschleißanzeigers liegen und von dem Punkt (11) des Verschleißanzeigers um einen radialen Abstand von 2 mm beabstandet sind.

9. Reifen nach einem der vorhergehenden Ansprüche, welcher mindestens einen Verschleißanzeiger umfasst und wobei auf die zweite Kautschukmischung (222) mindestens 20 % des Volumens des Abschnitts des mittleren Teils des Laufstreifens entfallen, der sich zwischen der durch den radial äußersten Punkt (11) des Verschleißanzeigers verlaufenden axialen Geraden und den Punkten (12) befindet, die radial außerhalb des radial äußersten Punktes (11) des Verschleißanzeigers liegen und sich in einem radialen Abstand von 2 mm von diesem radial äußersten Punkt (11) des Verschleißanzeigers befinden.

10. Reifen nach einem der vorhergehenden Ansprüche, welcher mindestens eine umlaufende Rille umfasst und wobei der Teil des Laufstreifens (2) mit einer radialen Dicke von 0,5 mm senkrecht unter der Oberfläche jeder umlaufenden Rille aus der ersten Kautschukmischung (221) besteht.

11. Reifen nach einem der vorhergehenden Ansprüche, welcher mindestens Rillen umfasst und wobei der radiale Abstand (d) zwischen den radial innersten Punkten der Rillen und der Scheitelbewehrung mindestens 1 mm und höchstens 2,5 mm, vorzugsweise höchstens 2 mm beträgt.

## Claims

1. Tyre (1) for a vehicle, comprising:
• a tread (2) intended to come into contact with the ground via a tread surface (22), radially on the outside of a crown reinforcement (3), said crown reinforcement comprising at least one crown layer comprising reinforcing elements,
• the tread having a central part and two axially outer parts, the central part being of an axial width equal to 90% of the axial width L of the tread (2), this central part comprising at least two rubber compounds (221, 222), these two rubber compounds making up at least 90% of the volume of the central part of the tread (2),
• the first rubber compound (221) being radially on the outside of the second rubber compound (222) and the first rubber compound (221) making up at least 40% and at most 60% of the volume of the central part of the tread (2),
• **characterized in that** the second rubber compound (222) has a Shore hardness DS2 at least equal to 5 plus the Shore hardness DS1 of the first rubber compound (221), each Shore hardness DS1, DS2 being measured at 23°C in accordance with standard ASTM 2240-15e1,
• **in that** the second rubber compound (222) has a secant extension modulus MA300_2 at 300% deformation, measured at 23°C in accordance with standard ASTM D 412-16, at least equal to 0.75 times the secant extension modulus MA300_1 at 300% deformation of the first rubber compound (221) and at most equal to 1.25 times the secant extension modulus MA300_1 at 300% deformation of the first rubber compound (221),
• **in that** the second rubber compound (222) has a dynamic loss tanD0_2, measured in accordance with standard ASTM D 5992 - 96, at a temperature of 0°C at 10 Hz, at least equal to the dynamic loss tanD0_1 of the first rubber compound (221), measured in accordance with standard ASTM D 5992 - 96, at a temperature of 0°C at 10 Hz, et
• **in that** the dynamic loss tanD23_1 of the first rubber compound (221), measured in accordance with standard ASTM D 5992 - 96, at a temperature of 23°C at 10 Hz, is at most equal to the dynamic loss tanD23_2 of the second rubber compound (222), measured in accordance with standard ASTM D 5992 - 96, at a temperature of 23°C at 10 Hz, et
• **in that** said first and second rubber compounds (221, 222) comprise a silica filler at least equal to 100 parts per hundred rubber and the dynamic losses tanD0_1 and tanD0_2 of which, measured in accordance with standard ASTM D 5992 - 96, at a temperature of 0°C at 10 Hz, are at least equal to 0.7.

2. Tyre according to the preceding claim, wherein the second rubber compound (222) has a dynamic loss tanD0_2, measured in accordance with standard ASTM D 5992 - 96, at a temperature of 0°C at 10 Hz, at most equal to 1.2 times the dynamic loss tanD0_1 of the first rubber compound (221), measured in accordance with standard ASTM D 5992 - 96, at a temperature of 0°C at 10 Hz.

3. Tyre according to any one of the preceding claims, wherein the dynamic loss tanD23_1 of the first rubber compound (221), measured in accordance with standard ASTM D 5992 - 96, at a temperature of 23°C at 10 Hz, is at most equal to 0.8 times the dynamic loss tanD23_2 of the second rubber compound (222), measured in accordance with standard ASTM D 5992 - 96, at a temperature of 23°C at 10 Hz.

4. Tyre according to any one of the preceding claims, wherein the second rubber compound (222) has a secant extension modulus MA300_2 at 300% deformation, measured at 23°C in accordance with standard ASTM D 412-16, at least equal to 0.9 times the secant extension modulus MA300 1 at 300% deformation of the first rubber compound and at most equal to 1.1 times the secant extension modulus MA300_1 at 300% deformation of the first rubber compound (221).

5. Tyre according to any one of the preceding claims, wherein the axially outer parts of the tread are made up of a rubber compound of which the dynamic loss tanD23_E, measured in accordance with standard ASTM D 5992 - 96, at a temperature of 23°C at 10 Hz, is at most equal to the dynamic loss tanD23_1 of the first rubber compound (221), measured in accordance with standard ASTM D 5992 - 96, at a temperature of 23°C at 10 Hz.

6. Tyre according to any one of the preceding claims, wherein the axially outer parts of the tread comprise at least 90% by volume of the first rubber compound (221), preferably are made up of the first rubber compound (221).

7. Tyre according to any one of the preceding claims, wherein the second rubber compound (222) has a Shore hardness DS2 at most equal to 10 plus the Shore hardness DS1 of the first rubber compound (221).

8. Tyre according to any one of the preceding claims, comprising at least one wear indicator and wherein the first rubber compound (221) constitutes at least 90% of the volume of the central part of the tread radially on the outside of the points radially on the outside of the radially outermost point (12) of the wear indicator (11), spaced apart from said point (11) of the wear indicator by a radial distance equal to 2 mm.

9. Tyre according to any one of the preceding claims, comprising at least one wear indicator and wherein the second rubber compound (222) makes up at least 20% by volume of the portion of the central part of the tread, between the axial straight line passing through the radially outermost point of the wear indicator (11) and the points (12) that are radially on the outside of the radially outermost point of the wear indicator (11) and are situated at a radial distance equal to 2 mm from said radially outermost point (11) of the wear indicator.

10. Tyre according to any one of the preceding claims, comprising at least one circumferential furrow and wherein the part of the tread (2), having a radial thickness of 0.5 mm, which is vertically in line with the surface of each circumferential furrow is constituted by the first rubber compound (221).

11. Tyre according to any one of the preceding claims, comprising at least grooves and wherein the radial distance (d) between the radially innermost points of the grooves and the crown reinforcement is at least equal to 1 mm and at most equal at 2.5 mm, preferentially at most equal to 2 mm.
